Europäisches Patentamt

European Patent Office

Office européen des brevets

(19)

(11) Veröffentlichungsnummer: **0 205 200**
**B1**

(12) **EUROPÄISCHE PATENTSCHRIFT**

(45) Veröffentlichungstag der Patentschrift: **01.08.90**

(21) Anmeldenummer: **86200876.0**

(22) Anmeldetag: **21.05.86**

(51) Int. Cl.⁵: **G 11 B 20/00,** G 11 B 20/10,
H 04 J 3/12 // G11B27/30

(54) **Verfahren zur Übertragung von Audio-Information und Zusatzinformation in digitaler Form.**

(30) Priorität: **21.05.85 DE 3518234**
**03.07.85 DE 3523809**

(43) Veröffentlichungstag der Anmeldung:
**17.12.86 Patentblatt 86/51**

(45) Bekanntmachung des Hinweises auf die
Patenterteilung:
**01.08.90 Patentblatt 90/31**

(84) Benannte Vertragsstaaten:
**AT BE CH DE FR GB IT LI LU NL SE**

(56) Entgegenhaltungen:
**EP-A-0 058 482**
**DE-B-2 804 150**
**FR-A-2 375 782**
**GB-A-1 252 555**
**GB-A-1 555 394**
**GB-A-2 063 018**
**US-A-3 541 264**

(73) Patentinhaber: **POLYGRAM GmbH**
**Glockengiesserwall 3**
**D-2000 Hamburg 1 (DE)**
(84) **DE**

(73) Patentinhaber: **Polygram International Holding
B.V.**
**Gerrit van der Veenlaan 4**
**NL-3743 DN Baarn (NL)**
(84) **BE CH FR GB IT LI LU NL SE AT**

(72) Erfinder: **Blüthgen, Björn**
**Gudehusweg 4**
**D-3100 Celle (DE)**

(74) Vertreter: **Peters, Rudolf Johannes et al
INTERNATIONAAL OCTROOIBUREAU B.V. Prof.
Holstlaan 6
NL-5656 AA Eindhoven (NL)**

Courier Press, Leamington Spa, England.

**Beschriebung**

Verfahren zur Übertragung von Audio-Information und Zusatzinformation in digitaler Form.

Die Erfindung bezieht sich auf ein Verfahren zur Übertragung von Audio-Information in digitaler Form, bei dem einer vorgegebenen Anzahl von Codeworten, jeweils einen Abtastwert eines analogen Audio-Signals darstellt, und bei dem zur zusätzlichen Übertragung einer Zusatzinformation in digitaler Form in jedem n-ten Codewort ein oder mehr niedrigstwertige Bits der digitalen Audio-Information durch Bits oler Zusatzinformation ersetzt werden, wobei n eine natürliche, ganze Zahl größer Null ist.

Bei der Bearbeitung, Speicherung und Wiedergabe, sowie bei der Übertragung von digitalen Breitbandsignalen besteht oftmals keine Möglichkeit, den vorgegebenen Rahmen für das zu bearbeitende, abzuspeichernde, wiederzugebende oder zu übertragende Signal für die Aufnahme zusätzlicher Informationen zu modifizieren. Ein solcher Wunsch besteht z.B. oftmals bei der Übertragung digitaler Audio-Informationen, z.B. Abspeicherung solcher Informationen auf optisch auslesbaren plattenförmigen Informationsträgern, wie z.B. CD. Es besteht dort nämlich der Wunsch, zusätzlich zu den digitalen Audio-Daten auch noch Zusatzinformationen, wie z.B. Schriftzeichen oder Bilder zu übertragen. Das Aufzeichnungsmodus und die Art der Codierung für sämtliche Informationen, z.B. bei einem solchen Informationsträger, bereits festliegen, müssen zusätzlich aufzunehmende Informationen in die bestehenden Übertragungskanäle eingefügt werden.

Nach dem Stand der Technik werden zu diesem Zwecke ein oder mehrere der niedrigstwertigen Bits einer digitalen Information durch Daten einer Zusatzinformation ersetzt. Es gibt dabei verschiedene Möglichkeiten, wie dies geschehen kann. So ist es z.B. aus der EP—A 058 482 bekannt, wenigstens zwei der niedrigstwertigen Bits der Abtastwerte einer Audio-Information zur Übertragung einer Zusatzinformation heranzuziehen, wobei eines der Bits die Daten repräsentiert und das andere ein Kontrollbit darstellt. Dieses Ersetzen der ursprünglichen Daten wird dabei in jedem Codewort, d.h. also bei jedem Abtastwert vorgenommen.

Ferner ist aus der GB—A 20 63 018 ein System zur Übertragung von digitalen Abtastwerten eines Sprachsignals bekannt, bei dem in jedem Abtastwert das niedrigstwertige Bit durch ein Bit einer Zusatzinformation ersetzt wird.

Diese beiden Verfahren ersetzen also ein oder mehr niedrigstwertige Bits der Audio-Information durch Daten-Bits einer Zusatzinformation. Bei diesen Verfahren sind jedoch zum einen nur relativ kleine Datenmengen der Zuatzinformation übertragbar, und zum anderen ist bei sehr kleinem Pegel des Audio-Signals eine Störung nicht völlig auszuschließen, da dann quasi nur noch die Zusatzinformationen über den Tonkanal übertragen werden und auf der Wiedergabeseite hörbar werden können.

Aus der DE—OS 28 04 150 ist ein Verfahren zum Übertragen pulscode-modulierter Analogsignale bekannt, bei dem in jedem Unterrahmen bei dem Codewort mit der kleinsten absoluten Amplitude ein Zusatzbit einer Zusatzinformation an die Stelle des geringstwertigen Bits der Abtastprobe tritt. Bei diesem Verfahren sind besonders starke, hörbare Störungen im Tonkanal zu erwarten, da gerade an kritischen Stellen, d.h. bei kleinem Pegel des Audio-Signals, Zusatzinformation im Tonkanal übertragen und damit hörbar wird.

Es ist Aufgabe der Erfindung, ein Verfahren zur Übertragung von Zusatzinformationen in digitaler Form in einem digitalen Audio-Kanal zu schaffen, das die Übertragung möglichst vieler Zusatzinformationen bei gleichzeitig akustisch möglichst unauffälliger Störung des Audio-Kanals ermöglicht.

Diese Aufgabe ist erfindungsgemäß dadurch gelöst, daß die Zahl der ersetzten Bits abhängig ist vom codierten Amplitudenwert des jeweiligen Codewortes der Audio-Information derartig, das bei einem Überschreiten größerer, vorgegeben Referenzwerte mehr Bits ersetzt werten als bei einem Überschreiten kleinerer, vorgegebener Referenzwerte.

Bei diesem Verfahren werden also in jedem n-ten, vorzugsweise jedem zweiten, Codewort ein oder mehr niedrigstwertige Bits der Audio-Information durch Bits der Zusatzinformation ersetzt. Dies geschieht in der Weise, daß die Zahl der erstzten Bits abhängig ist von dem codierten Amplitudenwert des digitalen Audio-Signals. Der codierte Amplitudenwert des digitalen Audio-Signals entspricht einem analogen Spannungswert des wieder in den analogen Bereich zurückgewandelten Audio-Signals auf der System-Empfangsseite. Es werden also bei relativ großen codierten Amplitudenwerten des digitalen Audio-Signals, d.h. also im analogen Bereich bei relativ großen Spannungen, ein oder mehr niedrigstwertige Bits der Audio-Information durch Daten-Bits der Zusatzinformation ersetzt. Dies führt dazu, daß bei sehr kleinem Pegel des analogen Audio-Signals und entsprechenden codierten Amplitudenwerten des digitalen Audio-Signals keine Zusatzinformation oder nur sehr selten in einem Bit eine Zusatzinformation übertragen wird. Mit steigendem Pegel des analogen Signals, erkennbar an den entsprechenden codierten Amplitudenwerten des digitalen Audio-Signals, werden dann zunehmend mehr niedrigstwertige Bits in jedem n-ten Codewort ersetzt. Die Parameter sind dabei frei wählbar, müssen jedoch vor und hinter der Übertragungsstrecke, d.h. hinter der Analog-Digitalwandlung und vor der Digital-Analogwandlung, gleich gewählt werden.

Nach einer weiteren Ausgestaltung der Erfindung ist vorgesehen, daß bei einem Überschreiten vorgegebener Werte der Codeworte zusätzlich zu jedem n-ten Codewort auch in den übrigen Codeworten, je nach Größe des überschrittenen codierten Amplitudenwertes, ein oder mehr niedrigstwertige Bits der digitalen Audio-Information durch Bits der Zusatzinformation ersetzt werden, wobei in vorgegebener Weise bei einem Überschreiten größerer, vorgegebener Referenzwerte mehr Bits ersetzt werden als bei einem Überschreiten kleinerer, vorgegebener Referenzwerte, die wenigstens in der Mehrzahl größer sind als die Referenzwerte zum Ersetzen niedrigstwertiger Bits in jedem n-ten Codewort.

Das oben beschriebene Ersetzen der niedrigstwertigen Bits in jedem n-ten Codewort kann auch in den dazwischenliegenden Worten vorgenommen werden. Auch hier werden mit zunehmendem Pegel des Audio-Signals mehr niedrigstwertige Bits des Audio-Signals durch Bits der Zusatzinformation ersetzt. Es hat sich als akustisch vorteilhaft erwiesen, zunächst in jedem n-ten Codewort z.B. ein bis zwei niedrigstwertige Bits zu ersetzen und die vorgegebenen Referenzwerte für das Einfügen weiterer Bits in den dazwischenliegenden Codeworten höher anzusetzen, so daß also mit zunehmendem Pegel der Audio-Information zunächst in jedem n-ten Codewort z.B. die zwei niedrigstwertigen Bits ersetzt werden und dann bei weiter ansteigendem Pegel schließlich zunächst ein, zwei, dann z.B. maximal drei niedrigstwertige Bits der übrigen Codeworte, die die digitale Audio-Information enthalten, durch Datenbits der Zusatzinformation ersetzt werden.

Nach einer weiteren Ausgestaltung der Erfindung ist vorgesehen, daß der Zähltakt für die Zahl n bei jedem Erscheinen fester, vorgegebener Werte der Codewort neu startet und zyklisch weiterläuft bis zum nächsten Erscheinen der vorgegebenen Codeworte, die den Zähltakt wieder neu starten.

Zur Identifikation derjenigen Codeworte, in denen niedrigstwertige Bits durch Daten-Bits ersetzt werden, ist eine Art Synchronisation notwendig. Diese wird in der Weise vorgenommen, daß bei vorgegebenen Werten der Codeworte bzw. bei vorgegebenen Folgen von Werten der Codeworte der Zähltakt zur Identifikation der manipulierten Codeworte neu startet. Dies bedeutet z.B., daß beim Erkennen eines bestimmten Code-Wortes oder eine bestimmten Codewort-Folge der Zähltakt neu startet und von diesem Codewort an in jedem n-ten Codewort die niedrigstwertigen Bits durch Daten-Bits ersetzt. Bei einem erneuten Erscheinen der vorgegebenen Werte der Codeworte oder einer vorgegebenen Folge von Codeworten startet der Zähltakt von neuem, so daß immer wieder eine Aufsynchronisation des Zähltaktes stattfindet und evtl. Fehler sich in der Übertragung und daraus resultierender falscher Identifikation der Codewörter nur eine begrenzte Zeit, nämlich bis zum nächsten neuen Aufsynchronisieren des Zähltaktes störend auswirken kann.

Nach einer weiteren Ausgestaltung des Verfahrens ist vorgesehen, daß nach der Übertragung die Daten-Bits der Zusatzinformation von den Daten-Bits der Audio-Information abgetrennt werden und die freigewordenen Bits der Audio-Information mit Bits eines digitalen Rauschoszillators belegt werden.

Das Verfahren nutzt den Verdeckungseffekt des Ohres zur Übertragung zusätzlicher Information aus. Dieser Verdeckungseffekt bewirkt, daß bei relativ lauten Pegeln eines Tonsignals kleinere Störungen für das Gehör nicht so deutlich hörbar werden. Unter bestimmten Bedingungen kann es dennoch vorteilhaft sein, die in die Toninformation eingefügten Dateninformationen nicht in dem Tonsignal zu belassen, sondern durch ein anderes Signal zu ersetzen. Hierbei hat sich ein Rauschsignal als vorteilhaft erwiesen. Das Ersetzen der Daten-Bits z.B. durch Rauschsignale ist im Regelfalle nicht erforderlich, wenn die Bits der Zusatzinformation so verteilt sind, daß sie auf das Ohr akustisch wie eine Rauschsignal wirken.

Eine weitere Ausführungsform der Erfindung wirol dadurch gekennzeichnet, daß die Codeworte, zusammen mit einer Synchronisierinformation einer Subcode-Information und gegebenenfalls einer Fehlercode-Information zu Blöcken fest vorgegebener Länge zusammengefügt sind, wobei das Verfahren die Folgenden Schritte enthält:

A. auf der Systemeingangsseite,

a. Unterteilen der in dem Block aufeinanderfolgenden Codeworte der Hauptinformation in mehrere gleiche Codewortgruppen mit jeweils unmittelbar aufeinanderfolgenden Codeworten,

b. Unterteilen jeder Codewortgruppe in hinsichtlich ihres Informationsinhaltes unveränderbare Bezugscodeworte und veränderbare Mixcodeworte, von denen vorzugsweise die Bezugscodeworte den Anfang einer codewortgruppe bilden,

c. Ersetzen einer vorgegebenen oder vom Wert der digitalen Audio-Information abhängigen Anzahl der Bits niedrigster Wertigkeit der Mixcodeworte durch Bits einer geeignet codierten Zusatzinformation, wobei bei größeren Werten mehr Bits ersetzt werden als bei kleineren Werten,

B. auf der Systemausgangsseite,

a. Erkennen mittels der synchronisier information die zeitliche Lage der Bezugscodeworte und der Mixcodeworte der Codewortgruppen,

b. Abspalten der die Zusatzinformation darstellenden Bits von den Mixcodeworten und Auffüllen der so freigewordenen Bit-Stellen mit Bits geeigneter Wertigkeit einer Substitutionshilfssignalquelle,

c. Dekodieren einerseits der rekonstruierten Codeworte der Hauptinformation und andererseits der aus den Mixcodeworten zurückgewonnenen Zusatzinformation.

Dieses Verfahren ist ausgerichtet auf die Unterbringung möglichst umfangreicher Zusatzinformationen in einem vorgegebenen Signalrahmen z.B. einer digitalen Audio-Platte (CD). Hierzu werden eine vorgegebene oder eine vom Werte der digitalen Audio-Information abhängige Anzahl der bits niedrigster Wertigkeit der Mixcodeworte durch Bits einer geeignet codierten Zusatzinformation ersetzt. Auf der Wiedergabeseite werden die Zusatzinformationen wieder abgespalten und die freigewordenen Bit-Stellen mit Bits geeigneter Wrtigkeit einer Substitutionshilfssignalquelle aufgefüllt.

Dieses Verfahren ermöglicht bei digitalen Informationsplatten, z.B. Compact-Discs, beispielsweise die übertragung zusätzlicher Bildinformation in dem an sich für die Toninformationen vorgesehenen Übertragungskanal. Auf der Systemausgangsseite werden die durch Zusatzinformationen beeinträchtigen Codeworte der Hauptinformation, obwohl diese Beeinträchtigung mit großer Wahrscheinlichkeit unhörbar bleibt, noch zusätzlich in der Weise verändert, daß diese Codeworte mit Bits geeigneter Wertigkeit einer Substitutionshilfsquelle wieder vervollständigt werden.

Zweckmäßige Ausgestaltungen dieser Ausführungsform des Verfahrens sind in den weiteren Patentansprüchen 7 bis 11 angegeben.

Die Erfindung wird anhand der Zeichnung näher erläutert. Es zeigen:

Fig. 1 das Blockschaltbild einer Schaltungsanordnung zum Einfügen Zusatzinformationen in digitale Audio-Informationen nach der ersten Ausführungsform der Erfindung,

Fig. 2 ein Blockschaltbild der Ausführungsform nach Fig. 1, jedoch für die Wiedergabeseite,

Fig. 3 bis 6 einige Beispiele zur Einfügung de Zusatzinformation in Codeworte der Audio-Information nach der ersten Ausführungsform der Erfindung,

Fig. 7 einen für digitale Audio-Signale üblichen, duch aufeinanderfolgende Blöcke vorgegebenen Formats festgelegten Signalfluß,

Fig. 8 bis 10 eine schematische Darstellung verschiedener Möglichkeit der Einfügung der Zusatzinformation in Codeworte der Hauptinformation nach der zweiten Ausführungsform der Erfindung,

Fig. 11 die Blockschaltbild-Darstellung der Ein- und Ausgangsseite eines von dem Verfahren nach der zweiten Ausführungsform der Erfindung Gebrauch machenden Systems,

Fig. 12 das nähere Einzelheiten aufweisende Blockschaltbild eines Wortstellengebers nach Fig. 11,

Fig. 13 das nähere Einzelheiten darstellende Blockschaltbild eines Bit-Stellengebers nach Fig. 11.

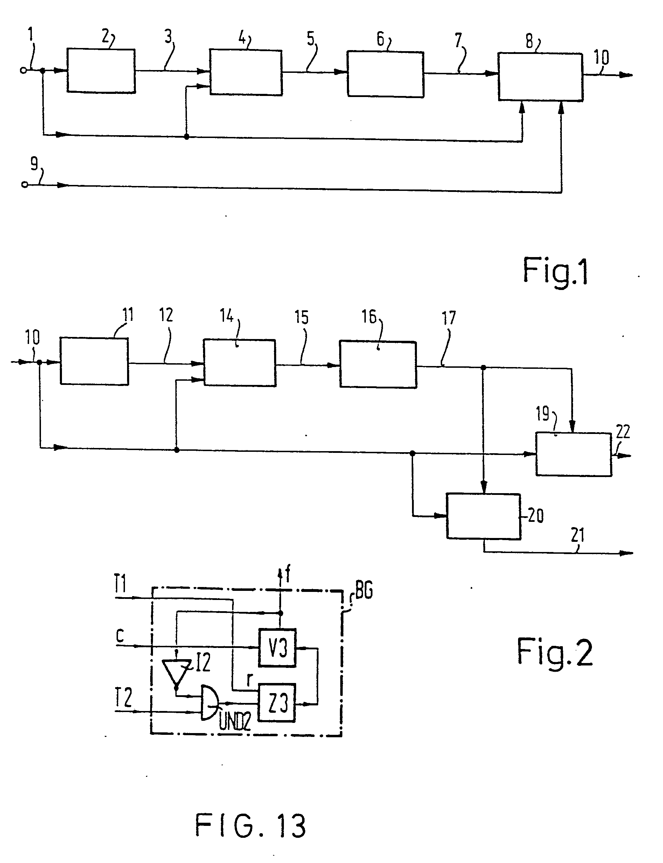

In den Fig. 1 und 2 sind die Blockschalbilder einer Schaltungsanordnung dargestellt, die nach der ersten Ausführungsform der Erfindung arbeitet.

In Fig. 1 ist dabei jener Teil der Schaltungsanordnung dargestellt, in dem vor der Übertragung in die digitalen Audio-Signale digitale Zusatzinformationen eingefügt werden. Zu diesem Zwecke wird das digitale Audio-Signal 1 zunächst einer Synchronisierstufe 2 zugeführt. In dieser Synchronisierstufe 2 wird das digitale Audio-Signal auf das Auftreten bestimmter, vorgegebener Codeworte oder bestimmter, vorgegebener Codewort-Folgen überprüft. Wird ein solches Codewort oder eine solche Codwort-Folge erkannt, so gibt die Synchronisationsstufe 2 ein entsprechendes Signal über ihren Ausgang 3 an die Detektionsstufe 4. Ein solches Signal wird immer dann gegeben, wenn ein Codewort auftritt, in dem Audio-Signal-Bit durch Datensignal-Bits ersetzt werden sollen. Die Detektionsstufe 4, der über einen Eingang ebenfalls das digitale Audio-Signal zugeführt wird, bestimmt für jedes Codewort dessen Wert. Tritt nun ein Koizidenz eines Codewortes auf, das sowohl einen bestimmten, vorgegebenen Wert überschreitet und das zusätzlich von der Synchronisationsstufe 2 als ein Codewort erkannt wurde, indem also einige Bits durch Daten-Bits ersetzt werden sollen, so gibt die Detektionsstufe 4 über ihren Ausgang 5 ein entsprechendes Signal an die Berechnungsschaltung 6. Die Detektionsstufe 4 wird dabei im allgemein so ausgelegt sein, daß sie mehrere, verschiedene Stufen detektiert und entsprechenden markierte Signale an die Berechnungsstufe 6 gibt. Die Berechnungsstufe 6 steuert nun mittels eines Signals 7 an ihrem Ausgang einen Umschalter 8 in der Weise, daß bei Codeworten, in denen ein oder mehrere niedrigstwertige Bits der Audio-Information durch Bits der Dateninformation ersetzt werden sollen, ein Signal an die Umschalteinrichtung 8 gegeben wird, das zusätzlich angibt, wie viel der niedrigstwertigen Bits des jeweiligen Codewortes durch Daten-Bits ersetzt werden sollen. In dem Umschalter 8 werden dann diese Bits des digitalen Audio-Signals durch Bits einer digitalen Zusatzinformation 9 ersetzt. An dem Ausgang 10 der Umschalteinrichtung 8 stehen dann die Codeworte wieder zur Verfügung, jedoch sind nun in einzelnen Codeworten die niedrigstwertigen Bits der Audio-Information durch Bits der digitalen Zusatzinformation ersetzt worden. Hinter dem Ausgang 10 durchlaufen dann diese Codeworte die Übertragungstrecke. Diese Übertragungsstrecke kann sehr verschiedener Art sein; es kann sich z.B. um eine PCM-Rundfunk-Übertragung, eine Aufzeichnung auf PCM-Tonband, eine Aufzeichnung auf eine digitale, optisch auszulesende Platte oder ähnliches handeln.

In Fig. 2 is der Teil des Blockschaltbildes de Schaltungsanordnung dargestellt, in dem das von der Übertragungsstrecke kommende, mit Zusatzinformation versehene Signal wieder decodiert wird, d.h. von dem die Daten der Zusatzinformation wieder abgetrennt werden und die entsprechenden Stellen der Audio-Information gegebenenfalls wieder mit anderen Daten aufgefüllt werden.

Das von der Übertragungsstrecke kommende Signal 10 gelangt dabei zunächst in eine Synchronisationsstufe 11. Diese Synchronisationsstufe 11 arbeitet genauso wie die Synchronisationsstufe 2 vor dem Übertragungsweg. Es werden also auch hier wieder bestimmte Codeworte oder Codewort-Folgen in den laufend übertragenen Codeworten gesucht und bei Identifikation ein entsprechender Impuls 12 an einen Detektor 14 gegeben. Dieser Detektor 14 ist in seiner Funktion ebenfalls identisch mit dem Detektor 4 der Schaltungsanordnung vor der Übertragung. Dem Detektor ist ebenfalls das von der Übertragung kommende digitale Signal 10 zugeführt. Der Detektor bestimmt bei einem durch den Synchronisator 11 bestimmten Codewort dessen Wert und gibt ein entsprechendes Signal 15 an die Berechnungsstufe 16. Diese bestimmt, genauso wie die Berechnungsstufe 6 der Schaltungsanordnung nach Fig. 1, aus dem Werte des jeweiligen Codewortes die Zahl der Bits, in denen sich statt der digitalen Audio-Information Bits der Zusatzinformation befinden. Die Berechnungsstufe 16 gibt ein Ausgangssignal 17 an einen Umschalter 20 und einen Kombinator 19. Der Umschalter 20 wird dabei von der Berechnungsstufe so gesteuert, daß die Zusatzinformationen an einem Ausgang 21 des Umschalters zur Verfügung stehen. Dies geschieht dadurch, daß in dem Umschalter 20 die Bits, die nicht digitale Audio-Information, sondern digitale Zusatzinformation darstellen, abgetrennt werden und als Signal 21 wiederum als reine digitale Zusatzinformation zur Verfügung stehen. Dem Kombinator 19 wird zusätzlich zum Ausgangssignal 17 der Berechnungsstufe 16 auch das vom Übertragungsweg kommende digitale Signal 10 zugeführt. Im Kombinator 19 werden nun die gleichen Bits, die im Umschalter 20 abgetrennt wurden, durch neue Bits ersetzt. Diese Bits können dabei vorteilhafterweise aus einer digitalen Rauschquelle gewonnen werden. Das Ausgangssignal 22 des Kombinators 19 enthält damit also wieder die originalen digitalen Audio-Informationen, die jedoch an den Stellen, in denen während der Übertragung Zusatz-Informationen eingefügt waren, durch ein subjektiv nicht störendes Rauschsignal überlagert sind.

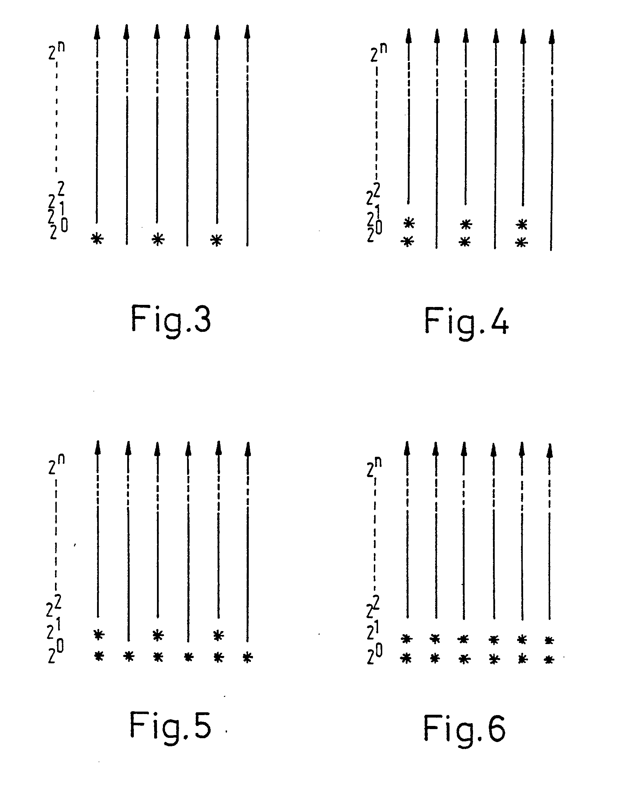

In den Fig. 3 bis 6 ist schematische dargestellt, wie nach der ersten Ausführungsform der Erfindung ein oder mehrere niedrigstwertige Bits einer Codewort-Folge bzw. einzelner Codeworte ersetzt werden können. Es sind jeweils sechs aufeinanderfolgende Codeworte mit jeweils dem niedrigstwertigen Bit $2^0$ bis zum höchstwertigen Bit $2^n$ symbolisch dargestellt. Mit einem Kreuz markierte Bits stellen dabei Stellen dar, an denen die Bits der digitalen Audio-Information ersetzt wurden. Die Darstellung der Fig. 3, 4, 5 und 6 entspricht steigenden Werten des digital codierten Audio-Signals. In Fig. 3 ist also die Einfügung einer Zusatzinformation dargestellt, wie sie beispielsweise bei relativ kleinen Werten des Audio-Signals vorgenommen werden könnte. Es wird hier zunächst in jedem zweiten Codewort lediglich das niedrigstwertige Bit ($2^0$) ersetzt. Bei steigendem Pegel werden dann, wie in Fig. 4 dargestellt, in ebenfalls jedem zweiten Codewort nunmehr jedoch die beiden niedrigstwertigen Bits ($2^0$ und $2^1$) ersetzt. Bei weiter steigendem Pegel ergibt sich dann das Einfügungsschema nach Fig. 5. Es werden nun, ebenso wie in Fig. 4, in jedem zweiten Codewort die beiden niedrigstwertigen Bits durch Daten-Bits der Zusatzinformation ersetzt, zusätzlich jedoch auch das niedrigstwertige Bit der übrigen Codeworte. In Fig. 6 ist dann die in diesem Beispiel gewählte maximale Einfügungsmenge von Daten der Zustzinformation dargestellt. Es werden nunmehr in allen Codeworten die beiden niedrigstwertigen Bits ersetzt.

Das in den Fig. 3 bis 6 dargestellte Schema für ein Verfahren nach der ersten Ausführungsform der Erfindung stellt selbstverständlich nur eine Möglichkeit dar. Es könnten z.B. auch zunächst bei kleinerem Pegel lediglich in jedem dritten Wort ein Bit ersetzt werden und dann bei steigendem Pegel in ebenfalls jedem dritten bis zu maximal drei Bits ersetzt werden. Erst dann könnte z.B. in den übrigen übertragenen Bits zunächst ein Bit und dann bis maximal drei Bits durch Bits einer Zusatzinformationsquelle ersetzt werden. Es sind viele weitere Variationen denkbar. Die Wahl geeigneter Parameter wird zum einen von der Art des Audio-Signals und zum anderen von der gewünschten akustischen Störfreiheit abhängen. So kann z.B. bei einem codierten Amplitudenwert von $\leq$ das Einfügen von Zusatzbits völlig unterbleiben, um das Audio-Signal bei diesen kritischen, niedrigen Pegeln unverfälscht zu belassen.

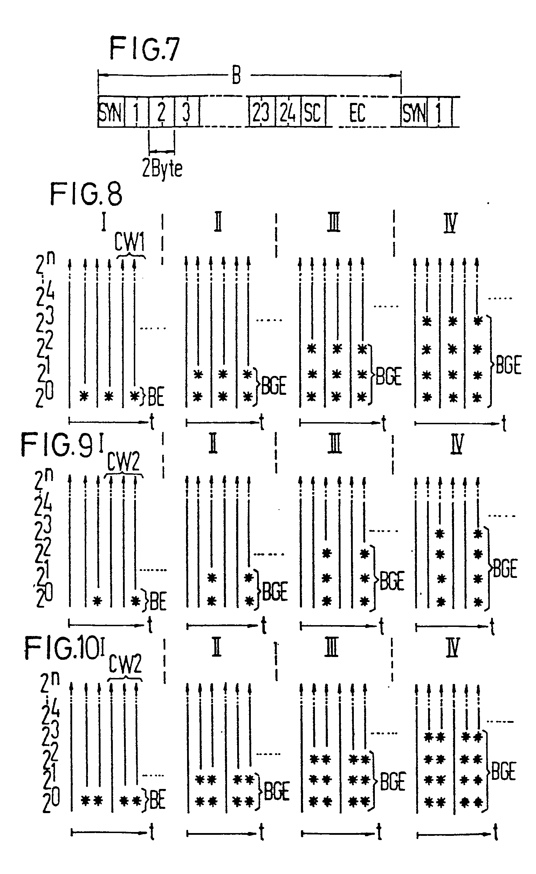

Im folgenden wird anhand der Fig. 7 bis 13 eine Schaltung erläutert, welche nach der zweiten Ausführungsform der Erfindung arbeitet.

In Fig. 7 is ein linearer Signalfluß dargestellt, der aus aufeinanderfolgenden Blöcken B besteht, von denen jeder Block mit einer Blocksynchronisation SYN beginnt, an die sich die Codeworte 1, 2, 3 . . . 24 der Hauptinformation anschließen. Dem letzten Codewort 24 der Hauptinformation folgt dann eine Subcode-Information SC. Der Block B wird abgeschlossen mit einer Fehlercode-Information EC, die auf der Systemausgangsseite bei der Rückgewinnung der ursprünglich analogen Hauptinformation in gewissen Grenzen eine Fehlerkorrektur ermöglicht. Zweckmäßig ist, wie in Fig. 1 angegeben, die Hauptinformation in 2 Byte langen Codeworten geordnet.

Bei fest vorgegebenem Blockformat, wie es der Block B nach Fig. 7 darstellt, soll die noch unterzubringende Zusatzinformation im Bereich der Hauptinformation angesiedelt werden. Verschiedene Möglichkeiten sind in den Fig. 8 bis 10 schematisch dargestellt. Jede der Fig. 8 bis 10 besteht aus vier über der Zeit t dargestellten Codewort-Folgeabschnitten I, II, III und IV. Die Codeworte der Hauptinformation selbst sind durch von unten nach oben verlaufende Pfeile mit der aufsteigenden binären Wertigkeit $2^0$, $2^1$, $2^2$, $2^3$, $2^4$, . . . $2^n$ ihrer Bit-Stellen angegeben.

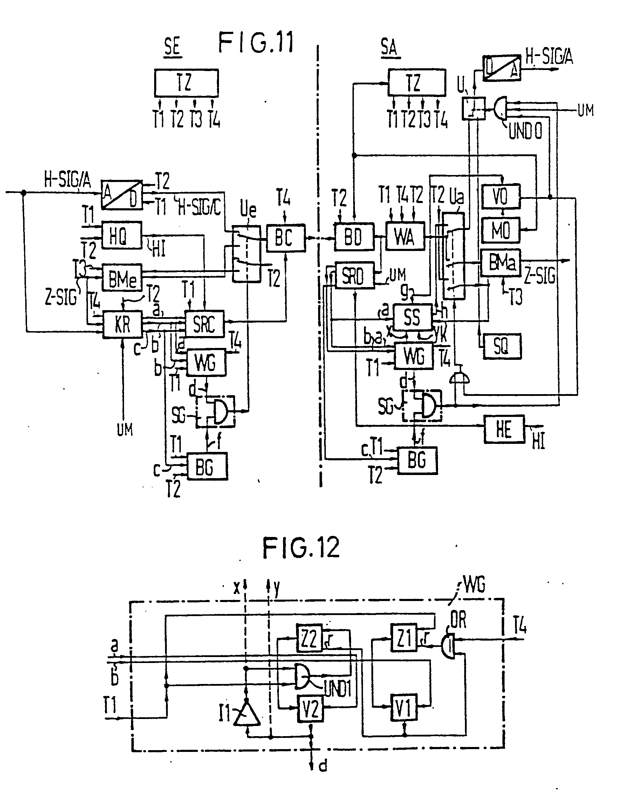

Bei Fig. 8 ist davon ausgegangen, daß bei den Codewort-Folgeabschnitten I, II, III und IV die Codeworte der Hauptinformation in Codewort-Gruppen CW1 mit zwei aufeinanderfolgenden Codeworten unterteilt sind. Bei den Schemata nach den Fig. 9 und 10 ist die Codewort-Folge der Hauptinformation in Codewort-Gruppen CW2 unterteilt, die jeweils drei aufeinanderfolgende Codeworte umfassen. Der Codewort-Folgeabschnitt I in den Fig. 8, 9 und 10 ist dadurch bestimmt, daß die Zusatzinformationen lediglich die niedrigstwertige Bit-Stelle $2^0$ eines Codewortes in Anspruch nimmt. Diese Bit-Einfügung ist entsprechend mit BE bezeichnet und durch ein Sternchen hervorgehoben. Bei den Codewort-Gruppen CW1 nach Fig. 8 ist somit immer das erste Codewort der Codewort-Gruppe ein unveränderbares Bezugscodewort, während das zweite, veränderbare Codewort das Mixcodewort bildet. Umfaßt eine Codewort-Gruppe (CW2) mehr als zwei aufeinanderfolgende Codeworte, also beispielsweise drei aufeinanderfolgende Codeworte, wie das die Fig. 9 und 10 zeigen, dann gibt es mit zunehmender Anzahl von Codeworten pro Codewort-Gruppe verschiedene Möglichkeiten der Unterteilung in Bezugscodeworte und Mixcodeworte. Bei dem Codewort-Folgeabschnitt I nach Fig. 9 sind die ersten beiden Codeworte einer Codewort-Gruppe CW2 Bezugscodeworte und lediglich das dritte Codewort ein Mixcodewort. Beim entsprechenden Codewort-Folgeabschnitt I nach Fig. 10 ist das erste Codewort ein Bezugscodewort und das zweite und dritte Codewort der Codewort-Gruppe CW2 ein Mixcodewort. Die Codewort-Folgeabschnitte II, III und IV unterscheiden sich vom Codewort-Folgeabschnitt I in den Fig. 8, 9 und 10 lediglich dadurch, daß in den Mixcodeworten jeweils mehr als ein Bit der Zusatzinformation untergebracht ist. Die Bit-Gruppeneinfügung ist jeweils BGE bezeichnet. Im Codewort-Folgeabschnitt II sind in den Mixcodeworten jeweils die Bit-Stellen $2^0$ und $2^1$ mit Bits der Zusatzinformation besetzt. Im Codewort-Folgeabschnitt III umfaßt die Bit-Gruppeneinfügung die Bit-Stellen $2^0$, $2^1$ und $2^2$ und im Codewort-Folgeabschnitt IV die niedrigstwertigen vier Bit-Stellen $2^0$, $2^1$, $2^2$ und $2^3$.

Die in den Fig. 8, 9 und 10 dargestellten Möglichkeiten der Unterbringung der Zusatzinformation in den aufeinanderfolgenden Codeworten der Hauptinformation stellen nur eine kleine Auswahl der an sich vorhandenen Möglichkeiten dar. Wie schon darauf hingewiesen worden ist, wird die Variationsmöglichkeit um so größer je größer die Anzahl der in einer Codewort-Gruppe zusammengefaßten Codewort ist. Grundsätzlich besteht auch die Möglichkeit, bei mehreren Mixcodeworten innerhalb einer Codewort-Gruppe eine unterschiedliche Anzahl von niedrigwertigen Bit-Stellen für die Einfügung von Bits der Zusatzinformation zuzuordnen. Ferner besteht die Möglichkeit, die Anzahl der einzufügenden Bits einer Zusatzinformation von dem Wert der Hauptinformation abhängig zu machen.

Die Systemeingangsseite SE und die Systemausgangsseite SA nach Fig. 11 zur Durchführung der im Zusammenhang mit den Fig. 8 bis 10 geschilderten Maßnahmen zur Durchführung des Verfahrens nach der zweiten Ausführungsform der Erfindung zur Unterbringung von Zusatzinformation in einem vorgegebenen Blockformat weisen jeweils eine Taktzentrale TZ mit einem Worttakt für die Hauptinformation T1, einen Bit-Takt für die Hauptinformation T2, einen Bit-Takt für die Zusatzinformation T3 und eine Blocksynchronisier-Impulsfolge T4 auf. Die Verwendung dieser Takte bei den einzelnen Baugruppen ist jeweils durch einen Pfeil in Verbindung mit dem Bezugszeichen für den betreffenden Takt zum Ausdruck gebracht. Die analoge Hauptinformation H-SIG/A wird dem Eingang des Analog-Digitalwandlers AD zugeführt, der ausgangsseitig die digitale Hauptinformation H-SIG/C an den eingangsseitigen Zweifach-Umschalter Ue abgibt, und zwar an den oberen Schaltkontakten des oberen der beiden Umschalter. Das bereits in digitaler Form vorliegende Zusatzignal Z-SIG wird über den eingangsseitigen Puffer BMe dem unteren Schaltkontakt des oberen der beiden Umschalter des eingangsseitigen Zweifach-Umschalters Ue zugeführt. Immer dann, wenn in einem Codewort der Hauptinformation ein oder mehrere Bits entsprechend den Fig. 8, 9 und 10 durch Bits der Zusatzinformation ersetzt werden sollen, wird der eingangsseitige Zweifach-Umschalter Ue von der gezeichneten Schaltstellung seiner beiden Umschalter in deren nicht bezeichnete Schaltstellung für die Dauer des Einfügungsvorganges umgeschaltet. Dabei erhält der Puffer BMe den Bit-Takt der Hauptinformation T2 als Auslesetakt, während gleichzeitig die Zusatzinformation im Puffer BMe über den oberen Umschalter des eingangsseitigen Zweifach-Umschalters Ue dem ihm nachgeschalteten Block-Codierer BC zugeführt wird. Im Block-Codierer BC wird das Format des Blocks B entsprechend Fig. 7 festgelegt und anschließend das formatierte digitale Signal der Systemausgangsseite SA zur Verfügung gestellt.

Die Systemausgangsseite SA weist eingangsseitig den Block-Decodierer BD auf, an den sich der Wortaufteiler WA anschließt. Am Ausgang des Wortaufteilers WA, an dem nunmehr nur noch die Codewort-Folge der Hauptinformation mit der darin untergebrachten Zusatzinformation auftritt, werden nun durch entsprechende Steuerung des ausgangsseitigen Mehrfach-Umschalters Ua einerseits die Bezugscodeworte und die hinsichtlich des Hauptinformationsinhaltes rekonstruierten Mixcodeworte dem Digital-Analogumsetzer D/A und die Zusatzinformation dem ausgangsseitigen Puffer BMa zugeführt. Am Ausgang des Digital-Analogwandlers D/A steht dann die wiedergewonnene analoge Hauptinformation H-SIG/A und am Ausgang des ausgangsseitigen Puffer BMa das digitale Zusatzsignal Z-SIG zur weiteren Verfügung an.

Die Steuerung des eingangsseitigen Zweifach-Umschalters Ue auf der Systemeingangsseite SE und des ausgangsseitigen Mehrfach-Umschalters Ua auf der Systemausgangsseite SA ist durch die Festlegung de Unterteilung der Codewort-Folge der Hauptinformation innerhalb des Blocks B nach Fig. 7 in Codewort-Gruppen, die Aufteilung einer Codewort-Gruppe in Bezugscodeworte und Mixcodeworte und durch die Anzahl der zu ersetzenden niedrigwertigen Bits der zu mixenden Codeworte durch Bits der Zusatzinformation bestimmt.

Für die Erzeugung des Steuersignals für den eingangsseitigen Zweifach-Umschalter Ue sind verschiedene Baugruppen zuständig. Da ist zunächst der Kombinator KR, dem neben anderen Signalen auch das digitale Zusatzsignal Z-SIG zugeführt wird. Der Kombinator KR hat ausgangsseitig drei Anschlüsse a, b, c, von denen am Anschluß a ein Signal über die Anzahl der Bezugscodeworte pro Codewort-Gruppe, am Anschluß b ein Signal, das die Zahl der Codeworte pro Codewort-Gruppe angibt, und am Anschluß c ein Signal, das die Zahl der Bits der Zusatzinformation pro Mixcodewort angibt, abgenommen werden können. Das Signal c kann dabei alternativ auch aus dem Wert der laufenden Codeworte gewonnen werden, wobei in Abhängigkeit von der Höhe der Werte auch das Signal c gewähl wird. Zu diesem Zwecke ist dem Kombinator KR zusätzlich das Signal H-SIG/A zugeführt, das laufend detektiert wird und aus dem beim Erkennen von vorgegebenen Werten der Codeworte das Signal c abgeleitet wird. Zur Umschaltung der beiden Betriebsarten zur Gewinnung des Signals c wird dem Kombinator KR ein Signal UM zugeführt. Die ausgangsseitigen Anschlüsse a und b des Kombinators KR sind mit den entsprechenden eingangsseitigen Anschlüssen a und b des Wortstellengebers WG verbunden, der immer dann an seinem ausgangsseitigen Anschluß d eine binäre Eins an den einen Eingang des aus einem Und-Glied bestehenden Steuersignalgebers abgibt, wenn er das Auftreten eines Mixcodewortes erkennt. Der ausgangsseitige Anschluß c des Kombinators KR ist mit dem entsprechenden eingangsseitigen Anschluß c des Bit-Stellengebers BG verbunden, der seinerseits an seinem ausgangsseitigen Anschluß f, der mit dem zweiten Eingang des ein Und-Glied darstellenden Steuersignalgebers SG verbunden ist, immer dann eine binäre Eins abgibt, wenn eine niedrigwertige Bit-Stelle eines Mixcodewortes durch ein Bit der Zusatzinformation ersetzt werden soll. Somit gibt der Steuersignalgeber SG in gewünschter Weise immer dann an seinem Ausgang ein Umsteursignal an den eingangsseitigen Zweifach-Umschalter Ue, wenn in einem auftretenden Mixcodewort entweder das niedrigstwertige oder zwei und mehr niedrigwertige Bits dieses Codewortes durch Bits der Zusatzinformation ersetzt werden sollen.

Wie weiter noch erkennbar ist, weist die Systemeingangsseite SE noch einen Subinformationscodierer SRC auf, der eingangsseitig die Hilfsinformation HI von einer Hilfsinformationsquelle HQ und darüber hinaus auch die an den ausgangsseitigen Anschlüssen a, b und c des Koordinators KR anstehenden Signal erhält. Der Subinformationscodierer SRC führt der ihm eingangsseitig zugeführten Informationen zur Subcode-Information SC nach Fig. 7 zusammen und führt sie ausgangsseitig zur Einfügung in die Blöcke B an den Block-Codierer BC weiter. Mit der Subcode-Information SC wird vorteilhaft der Systemausgangsseite SA die gegenwärtig gesandte Bezugs- bzw. Mischcodewort-Konfiguration mitgeteilt.

Auf der Signalausgangsseite SA empfängt der Subinformationsdecodierer SRD vom Ausgang des Blockdecodierers BD die Subcode-Information und gibt ausgangsseitig die Hilfsinformation HI an den Hilfsinformationsempfänger HE und weitere Signale an die eingangsseitigen Anschlüsse a, b, c, des Worstellengebers WG und des Bit-Stellengebers BG ab. Diese weiteren Signale entsprechen den Signalen an den ausgangsseitigen Anschlüssen a, b und c des Koordinators KR auf der Systemausgangsseite SA. Auch hier sind zwei Betriebsarten vorgesehen, nämlich zum einen eine fest vorgegebene Anzahl von niedrigwertiger Bits, die in einem Codewort ersetzt werden, und zum anderen eine Abhängigkeit dieser zu ersetzenden Zahl der Bits vom Wert des Codewortes. Ebenso wie dem systemeingangsseitigen Kombinator KR ist auch dem Subinformationsdecodierer RD ein Umschaltsignal UM zugeführt, welches die Umschaltung der beiden Betriebsarten zur Berechnung des Signals c steuert. Auf diese Weise wird dann entsprechend der Signaleingangsseite SE erreicht, daß der Steuersignalgeber SG immer dann ein Umschalten des ausgangsseitigen Mehrfach-Umschalters Ua bewirkt, wenn eine Bit-Stelle eines Mixcodewortes auftritt, die von einem Bit der Zusatzinformation besetzt ist. Dabei wird mittels des mittleren Umschaltkontaktes des ausgangsseitigen Mehrfach-Umschalters Ua die Zusatzinformation von den Mixcodeworten abgeleitet und dem ausgangsseitigen Puffer BMa zugeführt. Gleichzeitig wird durch den untersten Umschaltkontakt des ausgangsseitigen Mehrfach-Umschalters Ua bewirkt, daß immer dann, wenn dem ausgangsseitigen Puffer BMa ein Bit der Zusatzinformation zugeführt wird, am ausgangsseitigen Puffer BMa als Einlesetakt der Bit-Takt der Hauptinformation T2 anliegt. Als Auslesetakt für den ausgangsseitigen Puffer BMa ist der Bit-Takt der Zusatzinformation T3 wirksam, so daß am Ausgang das digitale Zusatzsignal Z-SIG kontinuierlich abgenommen werden kann.

In den Zeitpunkten, in denen dem ausgangsseitigen Puffer BMa die Bits der Zusatzinformation zugführt werden, können gleichzeitig in die Mixcodeworte als Ersatz Bits geeigneter Wertigkeit der Substitutionsquelle SQ eingefügt werden. Die zur Rekonstruktion der Mixcodeworte als Ersatz für die Bits der Zusatzinformation in die Mixcodeworte einzufügenden Bits können Bits geeigneter Wertigkeit einer Substitutionshilfssignalquelle, beispielsweise eines Ditheroszillators, sein.

Dies geschicht mittels des Umschalters U, durch den Eingang des Digital-Analogwandlers DA wahlweise mit dem obersten Umschaltkontakt des ausgangsseitigen Mehrfach-Umschalters Ua oder dem Ausgang der Sutitutionshilfssignalquelle SQ verbunden werden kann. Der Umschalter U wird für die Betriebsart, in der die Anzahl der ersetzten, niedrigstwertigen Bits vom jeweiligen codierten Amplituden wert des Code-Wortes abhängt, über den Ausgang des Und-Gliedes UND 0 gesteuert, an dessen erstem Eingang das Signal am Ausgang des Steuersignalgebers SG, an dessen zweitem Eingang das Ausgangssignal des Vergleichs VO und an dessen drittem Eingang das Signal UM zur Betriebsart-Umschaltung ansteht. Der Vergleicher VO vergleicht die am Ausgang des Wortaufteilers WA auftretenden Code-Wort mit vom Bezugswertspeicher MO gelieferten Referenz-Codeworten bzw. Codewortfolge-Kriterien.

Der Vergleicher VO gibt als immer dann eine binäre Eins an den zugehörigen Eingang des Und-Gliedes UND O, wenn das am Wortteiler-Ausgang anstehende Bit eines Codewortes vom Bezugswertspeicher MO als ein Zusatzinformations-Bit erkannt wurde. In diesem Falle werden dann über den obersten Schaltkontakt des ausgangsseitigen Mehrfach-Umschalters Ua Bits geeigneter Wertigkeit der Substitutionshilfssignalquelle im Digital-Analogwandler D/A zugeführt und über den mittleren Umschalterkontakt des Umschalters UA die Zusatzinformationen enthaltenden Bits am Ausgang des Wortaufteilers WA dem ausgangsseitigen Puffer BMA.

Die zu ersetzenden Bit-Stellen der zugeordneten Mixcodeworte liefert der Substitutionssignalgeber SS für die zweite Betriebsart über seinen ausgangsseitigen Anschluß h. Ihm werden über den eingangsseitigen Anschluß g vom Ausgang des Wortaufteilers WA die Bezugscodeworte der aufeinanderfolgenden Codewort-Gruppen und über den Anschluß k der Bit-Takt der Hauptinformation T2

7

zugeführt. Weiterhin erhält er über seinen eingangs seitigen Anschluß a vom Subcode-Decodierer SRD die für die vorzunehmende Substitution erforderlichen Angaben über die Anzahl der Bezugscodeworte pro Codewort-Gruppe. Weitere Informationen erhält der Substitutionssignalgeber SS von den ausgangsseitigen Anschlüssen x und y des Wortstellengebers WG.

Das nähere Einzelheiten darstellende Blockschaltbild für einen Wortstellengeber WG zeigt Fig. 12. Er besteht aus den beiden Zählern Z1 und Z2, den beiden Vergleichern V1 und V2, dem Oder-Glied OR, Und-Glied UND1 und dem Inverter I1. Im Zähler Z1, der eingangsseitig den Worttakt der Hauptinformation T1 erhält, werden die aufeinanderfolgenden Codeworte gezählt und mittels der über den eingangsseitigen Anschluß b zugeführten Information bezüglich der Zahl der Codeworte pro Codewort-Gruppe im Vergleicher V1 festgestellt, wann der Zähler Z1 eine Codewort-Gruppe gezählt hat. Das Ansprechen des Vergleichers V1 führt zu einem Rücksetzsignal des Zählers Z1 vom Ausgang des Vergleichers V1 über das Oder-Glied OR zum Rückstelleingang r des Zählers Z1. Gleichzeitig wird das Ausgangssignal des Vergleichers V1 dem Rückstelleingang r des Zählers Z2 zugeführt, dessen Zähleingang immer so lange die Taktimpulse des Worttaktes der Hauptinformation T1 über das Und-Glied UND1 zugeführt werden, solange der Vergleicher V2 nicht anspricht und somit kein Ausgangssignal dieses ergleichers über den Inverter I1 am zweiten Eingang des Und-Gliedes UND1 wirksam wird. Der Vergleicher V2, dem über den eingangsseitigen Anschluß a des Wortstellengebers WG am einen Eingang die Anzahl der Bezugscodeworte pro Codewort-Gruppe und dessen anderen Eingang das Ausgangssignal des Zählers Z2 zugeführt werden, spricht an, sobald er die Anzhl der Bezugs codeworte in einer Codewort-Gruppe erfaßt hat, und sperrt mit seinem Ausgangssignal, wie bereits erwähnt worden ist, über den Inverter I1 den Zähler Z2. Zugleich wird das Ausgangssignal des Vergleichers V2 als Ausgangssignal des Wortstellengebers WG am Anschluß d wirksam. Mit anderen Worten ist beim Wortgebeer WG der ausgangsseitige Anschluß d immer im Zeitintervall des Auftretens eines Mixcodewortes aktiviert.

Das Blockschaltbild des Bit-Stellengebers BG nach Fig. 13 hat einen ähnlichen Schaltungsaufbau wie des Wortstellengeber WG nach Fig. 12. Er verfügt überden Zähler Z3, den Vergleicher V3, das Und-Glied UND2 und den Inverter I2. Der Worttakt der Hauptinformation T1 ist dem Rückstelleingang r des Zählers Z3 zugeführt und setzt diesen zu Beginn eines Worttaktes in seine Ausgangsstellung zurück. Das Ausgangssignal des invertiert zählenden Zählers Z3 wird mit dem die Zahl der Bits der Zusatzinformationen pro Mixcodewort angebenden Information am eingangsseitigen Anschluß c im Vergleicher V3 verglichen und der Ausgang des Vergleichers V3 aktiviert, sobald diese Bit-Zahl erreicht ist. Zugleich wird der Eingang des Zählers Z3, dem der Bit-Takt der Hauptinformation T2 über das Und-Glied UND2 zugeführt wird, über den Inverter I2 vom Ausgangssignal des Vergleichers V3 gesperrt. Somit ist der ausgangsseitige Anschluß f des Bit-Stellengebers BG, der mit dem Ausgang des Vergleichers V3 identisch ist, immer in den Zeitintervallen aktiviert, in denen vorgegebene, mit Bits der Zusatzinformation anzufüllende Bit-Stellen von Mixcodeworten auftreten.

Das Verfahren nach der Erfindung läßt sich überall da einsetzen, wo im Zuge der Verarbeitung von digitalen Informationen in vorgegebenem Blockformat innerhalb des vorgegebenen Blockformats weitere Informationen mit verarbeitet werden sollen. Unter anderem ist die Anwendung des Verfahrens vorteilhaft bei in digitaler Form auf optisch auslesbaren plattenförmigen Informationsträgern abzuspeichernden Toninformationen, die zusätzlilch mit Bildinformationen versehen werden sollen.

Liste der in den Figuren der Zeichnung verwendeten
Bezugszeichen _____

| | | |
|---|---|---|
| B | = | Block |
| SYN | = | Blocksynchronisation |
| 1, 2, ... 24 | = | Codeworte |
| SC | = | Subcode-Information |
| EC | = | Fehlercode-Information |
| I, II, III, IV | = | Codewort-Folgeabschnitt |
| CW1, 2 | = | Codewort-Gruppe |
| BE | = | Bit-Einfügung |
| BGE | = | Bit-Gruppeneinfügung |
| SE | = | Systemeingangsseite |
| SA | = | Systemausgangsseite |
| TZ | = | Taktzentrale |
| T1 | = | Worttakt Hauptinformation |
| T2 | = | Bit-Takt Hauptinformation |
| T3 | = | Bit-Takt Zusatzinformation |
| T4 | = | Blocksynchronisierimpulsfolge |
| A/D | = | Analog-Digitalwandler |
| D/A | = | Digital-Analogwandler |
| HQ | = | Hilfsinformationsquelle |
| HE | = | Hilfsinformationsempfänger |
| HI | = | Hilfsinformation |
| BMe | = | eingangsseitiger Puffer |
| BMa | = | ausgangsseitiger Puffer |
| H-SIG/A | = | analoge Hauptinformation |
| H-SIG/C | = | codierte Hauptinformation |
| Ue | = | eingangsseitiger Zweifach-Umschalter |
| Ua | = | ausgangsseitiger Mehrfach-Umschalter |
| UM | = | Umschaltsignal Einfügungsvarianten |

| | |
|---|---|
| BC | = Blockcodierer |
| BD | = Blockdecodierer |
| WA | = Wortaufteiler |
| Z-SIG | = Zusatzinformation |
| KR | = Koordinator |
| SQ | = Substitutions-Hilfssignalquelle |
| U | = Umschalter |
| MO | = Bezugswertspeicher |
| SRC | = Subinformationscodierer |
| SRD | = Subinformationsdecodierer |
| SS | = Substitutionssignalgeber |
| WG | = Wortstellengeber |
| BG | = Bit-Stellengeber |
| SG | = Steuersignalgeber |
| a, b, c | = Anschlüsse |
| d, f, g, h | = Anschlüsse |
| k, x, y | = Anschlüsse |
| r | = Rückstelleingang |
| Z1, 2, 3, 4 | = Zähler |
| V0, 1, 2, 3 | = Vergleicher |
| OR | = Oder-Glied |
| I1, 2 | = Inverter |
| UND 0, 1, 2 | = Und-Glied |
| ROM | = Tabellenspeicher |
| S/O | = Serien-Parallelwandler |
| P/S | = Parallel-Serienwandler |
| UES | = Übergabeschalter |
| ADD | = Addierer |
| DL | = Verzögerungsglied |
| DV | = Dividierer |
| PF | = Pulsformer |
| SH | = Abtastwert-Halteschaltung |

# EP 0 205 200 B1

## Patentansprüche

1. Verfahren zur Übertragung von Audio-Information in digitaler Form, bei dem jedes einervorgegebenen Anzahl von Codeworten, jeweils einen Abtastwert eines analogen Audio-Signals darstellt, und bei dem zur zusätzlichen Übertragung einer Zusatzinformation in digitaler Form in jedem n-ten Codewort ein oder mehr niedrigstwertige Bits der digitalen Audio-Information durch Bits der Zusatzinformation ersetat werden, wobei n eine natürliche, ganze Zähl größer Null ist, dadurch gekennzeichnet, daß die Zahl der ersetzten Bits abhängig ist von der codierten Amplitude des jeweiligen Codewortes der Audio-Information olerartig, daß bei einem Überschreiten größerer, vorgegebener Referenzwerte mehr Bits ersetzt werden als bei einem Überschreiten kleinerer, vorgegebener Referenzwerte.

2. Verfahren nach Anspruch 1, dadurch gekennzeichnet, daß die Zahl n vorzugsweise zwei oder größer ist.

3. Verfahren nach Anspruch 1 oder 2, dadurch gekennzeichnet, daß bei einem Überschreiten vorgegebener Werte der Codeworte zusätzlich zu jedem n-ten Codewort auch in den übrigen Codeworten, je nach Größe des überschrittenen codierten Amplitudenwertes, ein oder mehr niedrigstwertige Bits der digitalen Audio-Information durch Bits der Zusatzinformation ersetzt werden, wobei in vorgegebener Weise bei einem Überschreiten größerer, vorgegebener Referenzwerte mehr Bits ersetzt werden als bei einem Überschreiten kleinerer, vorgegebener Referenzwerte, die wenigstens in der Mehrzahl größer sind als die Referenzwerte zum Ersetzen niedrigstwertiger Bits in jedem n-ten Codewort.

4. Verfahren nach einem oder mehreren der Ansprüche 1 bis 3, dadurch gekennzeichnet, daß der Zähltakt für die Zahl n bei jedem Erscheinen fester, vorgegebener Werte der Codeworte bzw. deren Wortfolgen neu startet und zyklisch weiterläuft bis zum nächsten Erscheinen der vorgegebenen Codeworte bzw. deren Wortfolgen, die den Zähltakt wieder neu starten.

5. Verfahren nach einem oder mehreren der Ansprüche 1 bis 4, dadurch gekennzeichnet, daß nach der Übertragung die Daten-Bits der Zusatzinformation von den Daten-Bits der Audio-Information abgetrennt werden und die freigewordenen Bits in den Codeworten mit Bits eines digitalen Rauschoszillators belegt werden.

6. Verfahren nach Anspruch 1, dadurch gekennzeichnet, daß die Codeworte zusammen mit einer Synchronisierinformation, einer Subcode-information und gegebenenfalls einer Fehlercode-Information zu Blöcken fest vorgegebener Länge zusammengefügt sind, wobei das Verfahren die folgenden Schritte enthält:

A. auf der Systemeingangsseite (SE),

a. Unterteilen der in einem Block (B) aufeinanderfolgenden Codeworte (1, 2, ... 24) der Hauptinformation (H-SIG/C) in mehrere gleiche Codewortgruppen (CW1, CW2) mit jeweils unmittelbar aufeinanderfolgenden Codeworten,

b. Unterteilen jeder Codewort-Gruppe (CW1, CW2) in hinsichtlich ihres Informationsinhaltes unveränderbare Bezugscodeworte und veränderbare Mixcodeworte, von denen vorzugsweise die Bezugscodeworte den Anfang einer Codewort-Gruppe bilden,

c. Ersetzen einer vorgegebenen oder vom Wert der digitalen Audio-Information abhängigen Anzahl der Bits niedrigster Wertigkeit der Mixcodeworte durch bits einer geeignet codierten Zusatzinformation (Z-SIG), wobei bei größeren Werten mehr Bits ersetzt werden als bei kleineren Werten,

B. auf der Systemausgangsseite (SA)

a. Erkennen der zeitlichen Lage der Bezugscodeworte und der Mixcodeworte der Codewort-Gruppen (CW1, CW2), mittels der Synchronisierinformation (T4),

b. Abspalten der die Zusatzinformation (Z-SIG) darstellenden Bits von den Mixcodeworten und Auffüllen der so freigewordenen Bit-Stellen mit Bits geeigneter Wertigkeit einer Substitutions-Hilfssignalquelle (SQ),

c. Docedieren einerseits der rekonstruierten Codeworte der Hauptinformation (H-SIG/C) und andererseits der aus den Mixcodeworten zurückgewonnenen Zusatzinformation (Z-SIG).

7. Verfahren nach Anspruch 6, dadurch gekennzeichnet, daß die Substitutions-Hilfssignalquelle (SQ) ein digitaler Ditheroszillator ist.

## Revendications

1. Procédé pour la transmission d'informations audio sous une forme numérique, dans lequel, parmi un nombre prédéfini de mots de code, chacun de ceux-ci représente chaque fois une valeur d'échantillonnage d'un signal audio analogique et dans lequel, en vue de la transmission supplémentaire d'une information additionnelle sous une forme numérique, un ou plusieurs bits de poids faible de l'information audio numérique sont remplacés dans chaque n'ème mot de code par des bits de l'information additionnelle, n étant un nombre entier naturel supérieur à zéro, caractérisé en ce que le nombre des bits remplacés dépend de l'amplitude codée du mot de code en question de l'information audio, d'une manière telle que le nombre de bits remplacés est plus élevé lorsque des valeurs de référence prédéfinies plus grandes sont dépassées que lorsque des valeurs de référence prédéfinies plus petites sont dépassées.

2. Procédé suivant la revendication 1, caractérisé en ce que le nombre n est de préférence égal ou supérieur à 2.

3. Procédé suivant la revendication 1 ou 3, caractérisé en ce que, lorsque des valeurs prédéfinies des mots de code sont dépassées, un ou plusieurs bits de poids faible de l'information audio numérique sont remplacés par des bits de l'information additionnelle, non seulement dans le nième mot de code, mais, en outre, aussi dans les autres mots de code, en fonction de la hauteur de la valeur d'amplitude codée dépassée, le nombre des bits remplacés étant, de manière prédéfinie, plus grand lorsque les valeurs de référence prédéfinies dépassées sont plus grandes que lorsque les valeurs de référence prédéfinies dépassées sont plus petites, ces valeurs étant, au moins pour la plupart, supérieures aux valeurs de référence pour le remplacement de bits de poids faibel dans chaque nième mot de code.

4. Procédé suivant l'uen quelconque des revendications 1 à 3, caractérisé en ce que le temps de comptage pour le nombre n répart à chaque apparition de valeurs prédéfinies fixes des mots de code ou des séquences de mots et continue de manière cyclique jusqu'à l'apparition suivante des mots de code prédéfinis ou des séquences de mots, qui font repartir le temps de comptage.

5. Procédé suivant l'une quelconque des revendications 1 à 4, caractérisé en ce qu'après la transmission, les bits de données de l'information additionnelle sont séparés des bits de données de l'information audio et les bits libérés dans les mots de code sont occupés par des bits d'un oscillateur de bruit numérique.

6. Procédé suivant la revendication 1, caractérisé en ce que les mots de code sont rassemblés en des blocs de longueur prédéfinie fixe, avec une information de synchronisation, une information de sous-code et, les case échéant, une information de code d'erreurs, le procédé comprenant les étapes suivantes:

A. du côté d'entrée (SE) du système,

a. diviser les mots de code (1, 2, . . . , 24) de l'information principale (H-SIG/C) qui se succèdent dans un bloc (B) en plusieurs groupes de mots de code égaux (CW1, CW2) contenant chacun des mots de code directement successifs;

b. divisier chaque groupe de mots de code (CW1, CW2) en des mots de code qui sont, pour ce qui est de leur contenu, invariables, mots de code de référence, et variables, mots de code de mélange, parmi lesquels les mots de code de référence forment de préférence le début d'un groupe de mots de code;

c. remplacer un nombre prédéfini ou dépendant de la valeur de l'information audio numérique des bits de poids faible des mots de code de mélange par des bits d'une information additionnelle adéquatement codée (Z-SIG), en remplaçant davantage de bits pour de grandes valeurs que pour des petites;

B. du côté de sortie (SA) du système,

a. reconnaître la position dans le temps des mots de code de référence et des mots de code de mélange des groupes de mots de code (CW1, CW2) à l'aide de l'information de synchronisation (T4);

b. séparer les bits représentant l'information additionnelle (Z-SIG) des mots de code de mélange et garnir les positions de bits ainsi libérées au moyen de bits de poids adéquat d'une source de signaux auxiliaire de substitution (SQ);

c. décoder, d'une part les mots der code de l'information principale reconstruits (H-SIG/C) et, d'autre part, l'information additionnelle récupérée à partir des mots de code de mélange.

7. Procédé suivant la revendication 6, caractérisé en ce que la source de signaux auxiliaire de substitution (SQ) est un oscillateur de vibration numérique.

**Claims**

1. A method of transmitting audio information in digital form, in which each of a predetermined number of code words represents a sample of an analog audio signal and in which, for the additional transmission of additional information in digital form, one or more least significant bits in every $n^{th}$ code word of the digital audio information is/are replaced by bits of the additional information, $n$ being a natural whole number larger than zero, characterized in that the number of bits being replaced depends on the encoded amplitude value of the relevant code word of the audio information in such a way that when larger predetermined reference values are exceeded more bits are replaced than when smaller predetermined reference values are exceeded.

2. A method as claimed in Claim 1, characterized in that the number $n$ is preferably two or larger.

3. A method as claimed in Claim 1 or 2, characterized in that when predetermined values of the code words are exceeded one or more least significant bits of the digital audio information are replaced by bits of the additional information not only in each $n^{th}$ code word but also in the other code words, depending on the magnitude of the encoded amplitude value which is exceeded in such a way that in a predetermined manner more bits are replaced when larger predetermined reference values are exceeded than when smaller predetermined reference values are exceeded, which smaller predetermined reference values are at least for the majority, larger than the reference values for the replacement of the least significant bits in each $n^{th}$ code word.

4. A method as claimed in any one of the Claims 1 to 3, characterized in that the clock-pulse counting operation for the number n is restarted each time that fixed predetermined values of the code words or sequences of a code word appear and proceeds cyclically until the next appearance of the predetermined code words or sequences of code words which again restart the clock-pulse counting operation.

5. A method as claimed in any one of the Claims 1 to 4, characterized in that after the transmission the additional information bits are separated from the data bits of the audio information and the vacated bit positions in the code words are filled with bits from a digital noise oscillator.

6. A method as claimed in Claim 1, characterized in that the code words together with synchronising information, sub-code information and, if applicable, error-code information are combined to form blocks of fixed predetermined length, the method comprising the following steps:

A. at the system input side (SE),

a. dividing the successive code words (1, 2, ... 24) in the block (B) of the main information (H-SIG/C) into a plurality of identical code-word groups (CW1, CW2) comprising code words, which succeed each other directly,

b. dividing each code group (CW1, CW2) into reference data words whose information content is invariable and into variable mixed code words, the reference code words preferably constituting the beginning of a code-word group,

c. replacing a number of least significant bits of the mixed code words by bits of suitably encoded additional information (Z-SIG), which number of bits to be replaced may be a predetermined number or a number which depends on the value of the digital audio information, more bits being replaced in the case of larger values than in the case of smaller values,

B. at the system output side (SA)

a. detecting the temporal position of the reference code words and the mixed code words of the code word groups (CW1, CW2) by means of the synchronising information (T4),

b. separating the bits representing the additional information (Z-SIG) from the mixed code words and filling the vacated bit positions with bits of suitable significance from a substitution auxiliary-signal source (SQ),

c. decoding the reconstructed code words of the main information (H-SIG/C) and of the additional information (Z-SIG) recovered from the mixed code words.

7. A method as claimed in Claim 6, characterized in that the substitution auxiliary-signal source (SQ) is a digital dither oscillator.

Fig.1

Fig.2

FIG. 13

$2^n$

$2^2$
$2^1$
$2^0$

Fig.3

$2^n$

$2^2$
$2^1$
$2^0$

Fig.4

$2^n$

$2^2$
$2^1$
$2^0$

Fig.5

$2^n$

$2^2$
$2^1$
$2^0$

Fig.6

# FIG.7

# FIG.8

# FIG.9

# FIG.10

# FIG.11

SE

SA

# FIG.12